# EUROPEAN PATENT APPLICATION

(11) **EP 2 541 048 A2**
(43) Date of publication of application: **02.01.2013**
(21) Application number: 11184560.8
(22) Date of filing: 10.10.2011
(51) Int. Cl.: F03D 1/06

(54) **Airfoil, wind rotor and wind rotor arrangement**

(30) Priority: 29.06.2011 EP 11005329
(71) Applicant: Fraunhofer-Gesellschaft zur Förderung der angewandten Forschung e.V., 80686 München (DE)
(72) Inventor: Popescu, Florin, 10243 Berlin (DE)
(74) Representative: Pfenning, Meinig & Partner GbR

(57) **Abstract**

The invention relates to an airfoil, in particular for a wind or fluid medium turbine, comprising a camber between an upper and a lower surface extending between a leading edge and a trailing edge distanced by a chord length, the camber comprising a thickness profile perpendicular to the direction along which the chord length is measured. Furthermore, the invention relates to a wind (or any gas/fluid medium) turbine comprising at least two of the inventive airfoils, and further a wind rotor arrangement comprising an additional stator structure.

According to the invention the lower surface is shaped such that the thickness profile comprises a discontinuous step separating the lower surface in a first and second section.

## Description

The invention relates to an airfoil, in particular for a wind or fluid medium turbine, comprising a camber between an upper and a lower surface extending between a leading edge and a trailing edge distanced by a chord length, the camber comprising a thickness profile perpendicular to the direction along which the chord length is measured. Furthermore, the invention relates to a wind (or any gas/fluid medium) turbine comprising at least two of the inventive airfoils, and further a wind rotor arrangement comprising an additional stator structure. The application claims priority of application EP 11005329. While throughout this document the fluid medium is mostly wind, the terms wind rotor and wind rotor arrangement incorporate any fluid medium turbine or turbine arrangement.

From the prior art, several possibilities of generating renewable energy from wind and/or incompressible flow are known. The main technical problem in generating electrical or mechanical power from wind (or another gas/fluid medium) at the micro-grid level is safety, efficiency, and cost-effectiveness. One current limitation of wind turbines is the size of horizontal axis wind turbines (HAWT), which are rather tall and dramatically affect the aesthetic look of the landscape. HAWTs are also too dangerous to be placed in densely populated areas, besides being very expensive to produce due to the high costs of steel necessary to safely support the generator and turbine assemblies at the rotor head.

An alternative is the vertical axis wind turbine (VAWT). The two basic designs of VAWTs are the Savonius and the Darrieus turbine.

Savonius turbines belong to the simplest turbines. Aerodynamically, they are drag-type devices consisting of two or three scoops. When looking at a Savonius turbine in a cross-section view, a two-scoop machine forms an "S" due to the combination of the two scoops. Because of the curvature, the scoops experience less drag when moving against the wind than when moving with the wind. The differential drag causes the Savonius turbine to spin. Compared to lift-type turbines Savonius turbines extract less of the wind's power but usually have the advantage that they are designed to be self-starting. As it is a design feature of Savonius wind turbines that the arrangement of the scoops is such that a differential drag is necessary to cause the Savonius turbine to spin, much wind energy is lost. In the context of this application, drag is the resistance resulting from moving a rigid surface against the wind or fluid medium. Because all of the vanes (or scoops) are surrounded by air when rotating, there is a constant drag that resists their movement even against the convex backs of downwind vanes moving away from the wind. When vanes are moving upwind and presenting their rear convex surface to the wind, the effect of drag is amplified by the added applied force of the wind. Hence, the existence of drag considerably reduces the efficiency of Savonius devices.

In order to overcome the problem of drag, Savonius turbines have been developed further. For example, Savonius devices may incorporate stators, which are stationary vanes arranged symmetrically around the rotor, to follow wind flow into the vanes moving downwind and to deflect wind flow from vanes moving upwind. An example is shown in US 6,740,989. The cited stator can improve efficiency by decreasing the amplification effect of drag caused by wind forces acting on the vanes rotating upwind. Rotating stators that are orientated in the direction of the wind accomplish the same permitting wind flow only to the vanes moving downwind. An example of this is shown in US 6,126,385. However, the above-mentioned designs do not solve the problem of drag. Motion of the convex surfaces of the rigid rotating vanes even against stationary air in a stator-protected rotor still produces drag, thus decreasing efficiency.

Further developments have yielded devices with complex mechanisms that decrease the surface area of vanes not moving downwind, see, for example, US 4,494,007 and US 7,094,017. Among these designs, clam-shell designs are found. The clam shells open to catch the wind in a downwind course before closing to present less surface area during the rest of the rotation. An example is shown in US 6,682,302.

A similar design is shown by sail-furling devices with vanes made of sailcloth, which are intended to open downwind but quickly furl or fold for the other part of rotation, as is shown in US 6,655,916 or US 5,642,983. While sail-type devices effectively address the problem of drag, a considerable amount of energy must be spent to operate the opening and closing mechanisms, thereby compromising the efficiency of such devices. This is particularly true when these devices add a wind-direction sensor for synchronizing changes to the shapes of the vanes.

A second common design is based on the Darrieus rotor. A traditional Darrieus rotor (see, for example, US 1,835,018) essentially consists of two or more long, thin blades with their ends connected at the top and bottom to a vertically rotating shaft. The cross-section of long blades has an airfoil shape, and this aerodynamic feature provides the transformation of wind-flow energy into rotational energy.

Darrieus-type turbines, however, suffer from several disadvantages. Many, especially those based on the original design, are not self-starting. Hence, they require an auxiliary power source to reach operational speeds. Darrieus turbines have an outside rotor speed of four to six times the wind speed. Thus, in winds of, for example, 40 km/h, the exposed knife blade-like rotors will be traveling in excess of 160 km/h. Moreover, the efficiency of the Darrieus design has been estimated to be only 30 to 40 percent.

When comparing Savonius- and Darrieus-type turbines, the maximal tip speed ratio of Savonius devices ranges in the area of 1:1 as compared to Darrieus rotor tip speed ratios of 3:1 or higher.

Further developments of Darrieus-type turbines are described in US 2011/0081243, which is a modern VAWT with improvements to provide a smooth torque output. An asymmetrical drag-type turbine is disclosed in US 2010/0233919, which uses wires to achieve the check valve-type functionality.

The invention aims at solving the above-mentioned deficiencies. The turbine design proposed is essentially a Darrieus-type device design but may be used not only in air, but also in a fluid medium such as water, and may be used with a vertical or horizontal axis arrangement.

The invention comprises airfoils for use in a wind turbine, the wind turbine and a wind rotor arrangement comprising an additional stator wherein the stator structure may be claimed as an invention of its own.

An airfoil according to the invention, in particular for use in a wind rotor, comprises a camber between an upper and a lower surface extending between, a leading edge and a trailing edge distanced by a chord length. In a cross-section perpendicular to the chord length, the airfoil (or in certain embodiments the camber itself) comprises a thickness profile along the chord length, i.e., the thickness may vary according to the position along the chord length.

The inventive airfoil is characterized in that the lower surface is shaped such that the thickness profile comprises at least one discontinuous step that separates the lower surface into a first and second section.

Preferably, the at least one discontinuous step is defined by an S-shape or a notch on the lower surface extending in the direction of the leading edge.

The discontinuous step in the thickness profiles can be described by an S-shape when looking at the cross-section of the airfoil, In particular, the S-shape may be chosen such that the "lower" bar of the S meets the "middle" bar of the S, so that the angle between the two bars is smaller than 90°. Quite naturally, this has the effect that the "upper" bar of the S also connects to the "middle" bar of the S in an angle smaller than 90°. Hence, the S-shape may define a small notch or an undercut in a direction perpendicular to the chord length direction.

The S-shape has the effect of catching the wind, allowing air to flow backward, acting as the convex surface of the vane of the Savonius design, and pushing the airfoil forward.

The notch or S-shape defining the discontinuous step may reach as far as up to the leading edge of the airfoil. In that case, the shape of the airfoil could be described as a folded sheet of material wherein a pocket is formed between the uppermost part of the upper and the lowermost part of the lower surface in the first section (parts of the lower surface defining a third section or an inner surface of the *S*-shape or notch) and the upper and lower surface divided by the material of the sheet only in the second section.

The first and section sections are preferably continuously connected by said third section, wherein a normal vector of the third portion of the lower surface points in the direction of the upper surface and a normal vector of the first or second section of the lower surface points away from the upper surface.

The thickness of the profile is defined by the maximal upper surface position and the minimal lower surface position, i.e., there may be an air pocket between the upper and lower surfaces.

The airfoil according to the invention provides better torque characteristics than the conventional designs of a Darrieus airfoil shape. The airfoil at hand, when fixed upon a rotating shaft, effectively behaves like a Savonius turbine at low speeds and like a Darrieus turbine at higher speeds. Hence, the airfoil according to the invention provides low drag and high lift in one direction and high drag and high lift in the reverse direction. The airfoils have very low drag at high turbine rotation speeds, at which the effective angle of attack of wind is low, the drag being beneficial to starting and operating a turbine at low speeds and being a principal feature only at low angles of attack of wind when air flows backward over the traditional airfoil shape and is caught in the discontinuous step in the thickness profile defined by the S-shape or, in other words, caught in a notch in the lower surface, which acts as the analog of the inside of the convex scoop of the Savonius design.

The proposed airfoil design can be effectively used in a wind rotor that comprises a rotational shaft and at least one, preferably two or four, airfoils according to the invention. The airfoils are connected to the rotatable shaft, preferably in a fixed manner, i.e., the angle at which the airfoil is mounted upon the rotating shaft is fixed, thus simplifying the design of the wind rotor.
Preferably, no further moving parts (besides the rotating shaft) are situated on the airfoil or a web connecting the airfoil to the rotating shaft.

A wind rotor comprising airfoils according to the invention may be part of a wind rotor arrangement that in addition to the wind rotor comprises a stator structure at least partially surrounding the wind rotor wherein the stator comprises a flow entry passage, preferably for compressing a flow of a medium in the direction of the wind rotor.

A stator structure does not only provide aesthetic and safety benefits but may also effectively increase wind speed at the rotor by decreasing the area of air flow or medium flow (for example water) from the entry point of the flow entry passage at the outside of the stator to the flow entry area where the stator neighbors the rotor directly. While a Savonius turbine of similar size as the wind rotor may exhibit higher air speeds at the vanes and greater kinetic energy in the rotor itself, the proposed design of the airfoils and the wind rotor does not require materials as strong and, consequently, as expensive as the Savonius design. The invention at hand is therefore suited for installation on top of existing buildings and does not endanger the structural integrity of said buildings.

A wind rotor arrangement according to the invention may be configured such that noise and vibration are handled, for example, by an embedded computerized closed-loop vibration control that is mainly active at wind speeds that produce vibration close to the building's, rotor's or stator's resonant frequency. The invention at hand may not only be used for translating wind power into mechanical or electrical power (for example for powering pumps or powering generators), but may also be used for marine power generation, power generation on movable platforms such as ships, on hilltops or on specially constructed towers, power generation from variable-direction underwater sea currents and waves, residential structures that are independent from and not connected to the main power grid, and for wind rotor arrangements of top of buildings or an array of such arrangements on housing projects and residential towers or factories.

Further embodiments are described in connection with the drawings and the dependent claims.

In an embodiment, the airfoil of the invention may be configured such that the first section covers between 20 to 80 percent of the chord length. As the first section determines the size of the discontinuous step in the direction of the thickness and in a direction pointing towards the leading edge, the length of the first section also determines the maximal length of the S-shape or notch.

In a further embodiment, the airfoil comprises upper and lower surfaces that are continuous surfaces, i.e., the airfoils may be designed such that the upper and lower surfaces only meet at the leading or trailing edges and do not comprise holes, which would lead to torus-like structures. An optional flap would then be situated either on the upper or lower surface and is either passively activated by the wind or actively activated by a control circuit. The airfoil may comprise flaps which allow a guided diversion of the air flow for example for braking or slowing down the rotor or which allow for a variation of the geometry of the airfoil, i.e. a variation of the chord length and thickness profile of the airfoil. Said flaps can also be situated along the trailing edge. An airfoil, f.e. comprising a camber made from a continuous workpiece with continuous upper and lower surfaces without additional moving parts such as flaps, is also within the scope of the invention.

As an alternative invention, the *S*-shape of the airfoil may be defined by the position or inclination of one or more flaps or an array of such flaps situated either on the lower and/or upper surface. The flaps are configured to increase drag. The shape of the S-shape or notch can then be varied by changing an angle of the inclination of a flap. Referring to the language of claim 1, the lower side of a flap situated at the lower surface is then understood as defined as a continuation of the lower surface and the notch is defined by the upper side of the flap and the part of the lower surface directly opposite the upper side. Similarly, flaps situated on the upper surface may also act as a variable notch. Preferably, the remaining camber comprises is a non-toroidal structure.

The fixed or variable chosen geometry of the airfoil ensures that the discontinuous step and the S-shape or notch defined by it diverts the air flow in the most efficient manner. It should be noted, however, that small flaps in the airfoil can be envisioned, which may be used for braking the wind turbine arrangement or wind turbine by opening and thereby decreasing the efficiency or even reversing the air flow.

In a further embodiment, the maximal thickness of the airfoil along the first section is at least 150, preferably 200, 300, or 400 percent of the maximal thickness along the second section. The differences in maximal thickness between the first and section sections define an upper bound of the thickness of the notch or S-shape and thereby define the maximal size of the S-shape.

So far, only the shape of the airfoil in a cross-section has been described. It is understood that the airfoil in a direction essentially perpendicular to the cross-section comprises a width extending along a width axis. In a further embodiment, the width of the airfoil is greater than the chord length, i.e., the discontinuous step may be present along the entire width but may vary in shape along the width.

In a preferred embodiment, the shape and size of the discontinuous step is essentially constant along the entire width of the airfoil.

The camber may be straight or curved or may be arranged in a helical shape along the width direction. An airfoil may therein be shaped such that it better matches the characteristics of local wind profiles.

Besides the airfoil being possibly made of a bent sheet of material, the portions between the upper and lower surfaces closest to each other, i.e., interspersed with material, may comprise hollow portions to save weight and thus improve the characteristics of the airfoil.

A variety of materials may be used for an airfoil according to the present invention. This variety comprises plastics, metals, or a combination thereof. In particular, fiber-enforced materials, carbon sheets, or similar composite materials may be used.

In a further embodiment of the wind rotor, the rotatable shaft comprises at least two airfoils connected to the rotatable shaft at a distance away from the rotatable shaft (a radius) and connected by webs, bars, or similar structures known from Darrieus rotor designs.

In order to maximize the torque and the efficiency of the rotor, it is preferred to arrange the airfoils in a cyclic group Cₙ, where n is a power of 2. It has been shown that the torque characteristics of the wind rotor are most efficient when such a symmetrical arrangement is chosen.

In a further embodiment, the rotatable shaft is arranged to rotate around an either essentially vertical or essentially horizontal axis. Both designs may be used in different situations. For example, an essentially horizontal axis may be utilized when using the wind turbine in areas of more constant wind profiles, with the wind predominantly coming from a single direction.

In a further embodiment, the wind rotor may comprise further airfoils, the further airfoils being arranged in a stacked manner at different levels of the rotating shaft. By stacking the arrangement of the wind rotor, the torque profile may be smoothed out by placing an airfoil in each segment of a cycle surrounding the rotatable shaft without blocking the wind entry or exit passages. Each stack level is preferably exhibiting a Cₙ symmetry as defined above. Depending on the chord length of the airfoil and the radius at which the airfoil is arranged from the rotatable shaft, two, three, four, or more stacks may be used to situate an airfoil at every angle around the circle.

In a further embodiment, the wind rotor may be connected to a mechanical device such as a pump or a generator for producing electrical power. In either case, the wind rotor may comprise a control circuit. Preferably, said control circuit is configured for a closed-loop control of the rotor, wherein the control circuit may use energy dissipation mechanisms such as brakes or storage and release mechanisms such as power capacitors or variable-geometry centrifugal regulators, as well as sensors for pressure, movement, and output current mounted not only on the rotor (and the stator) but on the supporting structure upon which the wind rotor is built. The control circuit and/or embedded, preferably closed-loop control system may reduce vibration and noise, thereby increasing safety and energy generation efficiency of the wind rotor or wind rotor arrangement. The optimal use of such a control system minimizes vibration and risk of rupture while minimizing the use of braking mechanisms and the resulting energy loss. The principal methods of limiting noise and vibration consist in either an added load such as a damper or brake on the turbine or, alternatively, cyclical storage and release of electromechanical energy using the generator itself as a load/torque producer, both solutions providing smoother net torque production and therefore produce less vibration and noise. Further protection may be achieved by movement of the flow entry and/or exit surfaces of the stator, wherein the flow entry and/or exit passages are closed and, thus, the air flow to the rotor is restricted in case of high-speed or highly turbulent winds.

A wind rotor arrangement according to the invention comprises an additional stator structure adapted for compressing, speeding up, and directing wind to the rotor by providing at least one flow entry passage and preferably at least one flow exit passage. The design of the stator is chosen such that it increases the wind speed. The stator does not need to achieve greater pressure on one side of the wind rotor (preferably fully surrounded by the stator) than the other. Such stator embodiments may be achieved by stacking sheets vertically and/or horizontally so as to provide a Venturi effect that leads to an increased wind speed at the rotor entry.

In a further embodiment, the rotor or the stator may be surrounded by a mesh to protect, for example, birds from flying into the rotor.

Further embodiments of the invention can be seen in the following drawings. It should be noted that features shown in the drawings may be claimed independently of other features shown in the drawings. This is particularly true for the features described belonging to different embodiments in the previous passages. However, different features of different embodiments may also be combined with each other and are not restricted to the embodiment of the drawing in which they are shown.
- Fig. 1: discloses a generic cross-section of an airfoil of the prior art;
- Fig. 2A: shows a cross-section of an airfoil according to an embodiment of the invention;
- Fig. 2B: emphasizes an S-shape of the airfoil of Fig. 2a;
- Fig. 3A: discloses a further embodiment of an airfoil according to the invention;
- Fig. 3B: discloses the thickness profile of the airfoil of Fig. 3A and shows the discontinuous step;
- Fig. 3C: discloses an airfoil in a different perspective;
- Figs. 3D-G: disclose different geometries of an exemplary airfoil;
- Fig. 4: discloses a wind rotor according to an embodiment of the invention;
- Figs. 5A-B: describe further embodiments of a wind rotor according to the invention;
- Figs. 6A-C: disclose wind rotor arrangements comprising a stator structure;
- Fig. 7: discloses a schematic view of a wind rotor connected to an electric generator;
- Figs. 8A, B: alternative embodiment of an airfoil.

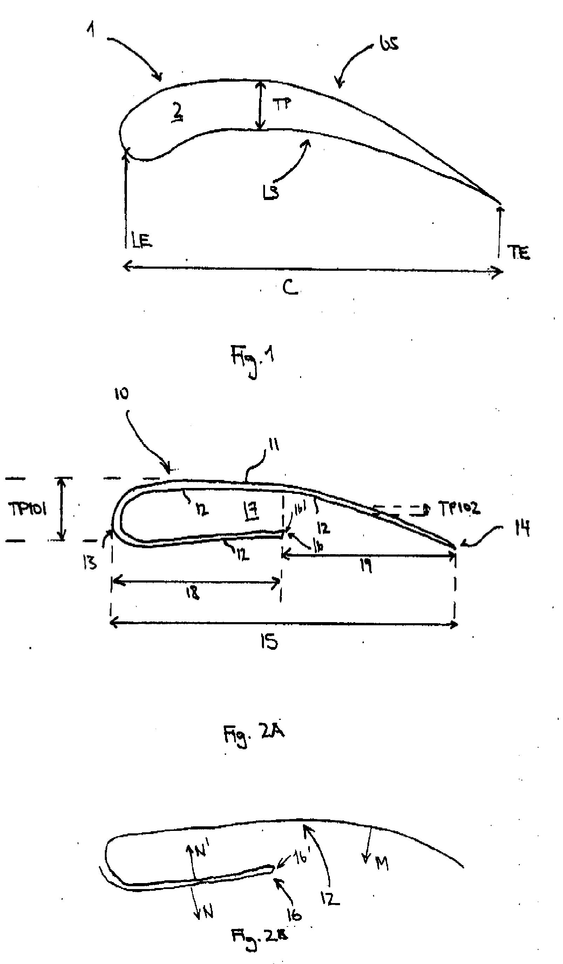

Fig. 1 discloses an airfoil according to the prior art. Airfoil 1 comprises a camber 2 that extends along a chord length C between a leading edge LE and a trailing edge TE. The upper surface US is defined to reach from the leading edge to the trailing edge on the upper side, while the lower surface LS is defined to reach from the leading edge to the trailing edge on the lower side of the airfoil 1. A thickness perpendicular to the chord length direction can be summarized as a thickness profile TP, which is defined by a thickness along each position of the chord length C, i.e. the thickness profile is a function dependent on a variable along chord length C. In airfoil design, the upper surface is longer than the lower surface, thereby creating a lift in the upper direction when wind or a different flowing medium is flowing from left to right in Fig. 1. The different shapes, in particular the curvature of the camber between the leading edge and the trailing edge, may be chosen to tune the airfoil to particular uses. In the example shown in Fig. 1, the airfoil shows a strong curvature where the trailing edge is situated lower than the leading edge. This does not necessarily have to be the case. The airfoil shapes shown in the following embodiments are only exemplary regarding the generic shape of the airfoil. In general, the lower surface of generic airfoils such as the NACA airfoils may be modified by the means of the invention.

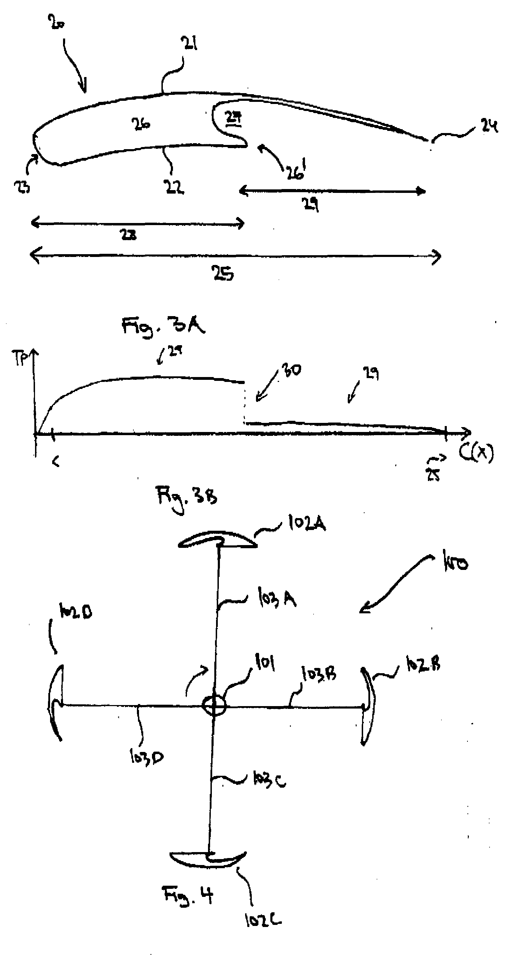

Fig. 2A discloses an airfoil 10 according to an embodiment of the invention. Airfoil 10 comprises an upper surface 11 and a lower surface 12, each extending between a leading edge 13 and a trailing edge 14. The distance between the leading and trailing edges is the chord length 15. The lower surface 12 comprises an S-shape 16, thereby defining a notch 17 into which air or a different medium may flow and create a backward rotation. The S-shape divides the airfoil 10 into a first section 18 extending from the leading edge 13 to the connecting point 16' of the lower and middle bar of the S and a second section 19 extending from the meeting point of the lower and middle bars of the S-shape 16 to the trailing edge 14. As the maximal thickness is defined by the uppermost spot of the upper surface 11 and the lowermost spot of the second surface 12, it is evident that the maximal thickness TP101 of the first section 18 is much greater than the thickness TP102 of the second section 19. Hence, when moving along the chord length 15 and measuring the different thicknesses, there is a discontinuous step in the thickness profile when moving from the first section 18 to the second section 19. This will be further illustrated when discussing the embodiment of Figs. 3A, B. In the embodiment of Figs. 2, the discontinuous step is defined by the S-shape and a notch extending almost up to the point of the leading edge 13. It is easily understood that the airfoil shown in Fig. 2A may be designed from a single bent sheet of material where the exact shape of the bend defines an outer profile of the airfoil (the outer profile being essentially defined by the thickness profile and the shape of the upper and lower surfaces), the size and position of the notch 17 or S-shape., and thereby the corresponding thickness profile TP.

The S-shape of airfoil of the embodiment shown in Fig. 2A is shown in detail in Fig. 2B. In Fig. 2B only the lower surface 12 is shown and the S-shape can be easily identified. It can be seen that the lower bar of the S and the middle bar of the S along most of their parts are almost parallel to each other. The middle bar of the S-shape lying to the left of the meeting point 16' defines a third section. The normal vector N' of said third section essentially points in a direction opposite of the normal vectors N, M of the lower surface of the first and second sections, respectively. Hence, the angle between the lower and middle bar is essentially 0° and in the present example defines a notch that ranges far into the camber in the direction of the leading edge 13.

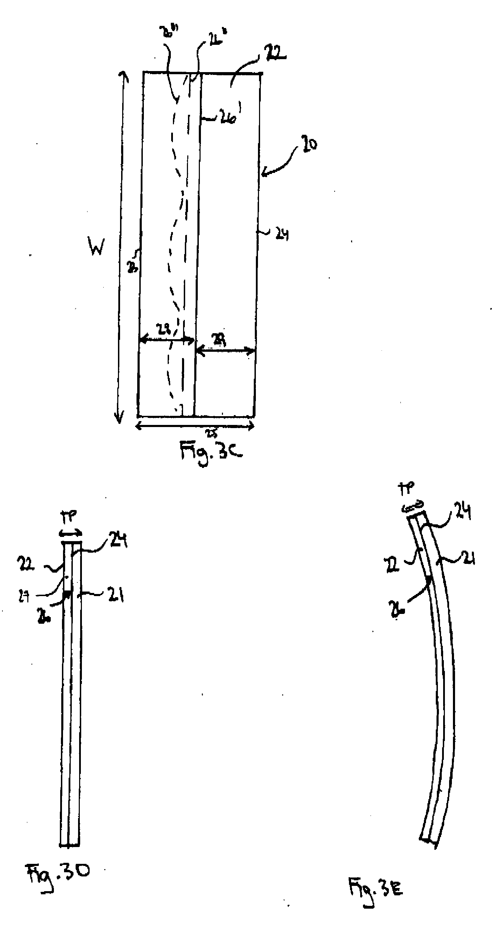

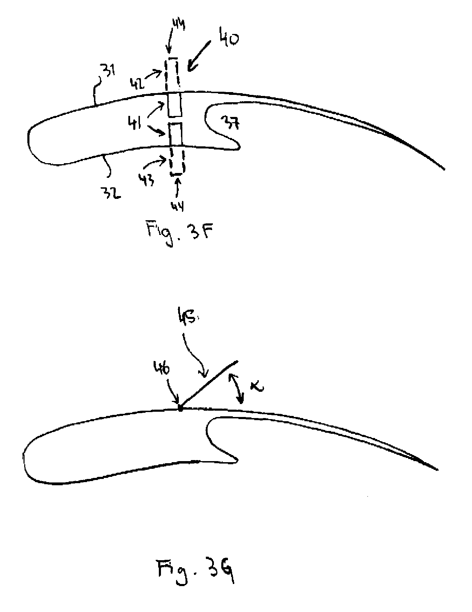

Different embodiments of an airfoil according to the invention are shown in Figs. 3. Fig. 3A discloses an airfoil 20 comprising an upper surface 21 and a lower surface 22 extending between a leading edge 23 and a trailing edge 24 along the chord length 25. The upper surface 21 and the lower surface 22 define a camber 26 which comprises a notch 27 having the shape of an undercut in a direction perpendicular to the chord length. The undercut has an S-shape where the lower bar of the S and the middle bar of the S generally meet at meeting point 26' at an angle of approximately 30-45°. Hence, the notch 27 extends into the first section 28 by a short distance. The corner of the meeting point 26' of the lower and middle bar of the S defines a second section 29 up to the trailing edge 24.

Fig. 3B discloses the thickness profile TP of airfoil 20 along the chord length 25. It can be easily understood that the chord length profile is a function of the position along the chord length 25 and may be described as C(x), where x defines the position along the chord length. The thickness profile TP shown in Fig. 3B discloses a discontinuous step 30 that marks the end of the first section 28 and the beginning of the second section 29. The thickness at each position of the thickness profile is measured by the uppermost part of the upper surface 21 and the lowermost part of the lower surface 22. It is easily understood that a thickness profile for the embodiment of Fig. 2A would look very similar by the definition of the measured thickness given above.

Fig. 3C shows airfoil 20 from a different perspective from which the width of the airfoil is seen. Previously described meeting point 26' of the lower and the middle bar of the S is now a meeting line and line 26' follows the shape of the leading edge'23 and the trailing edge 24. As can be further seen by the dotted line 26", which marks the left furthest-most extension of notch 27 in the direction of the leading edge 23, the notch does not have a varying profile along width W. Of course, the notch 27 does not have to extend along the entire width W of the airfoil but may be limited to only parts of the airfoil. It is also shown by bowlike line 26‴ that notch 27 may have a varying depth in the direction toward the leading edge 23.

Figs. 3D and 3E show exemplary shapes of the airfoil 20 in the direction of the thickness profile. As can be easily seen, Fig. 3D discloses an airfoil that runs straight along width W, while Fig. 3E defines an airfoil running in a curved manner and thus being applicable for different wing conditions. While the extension of notch 27 is shown as constant along the width of the airfoil in Figs. 3D and 3E, the thickness profile C(x) can be extended to extend in two directions, i.e. along the chord length and the width, resulting in a two-dimensional thickness profile C(x,y). In the case of the two-dimensional thickness profile, the discontinuous step may be employed along some segments of the width but not across the entire width. Even when a discontinuous step is present for all positions along the width, the thickness profile of the airfoil can still vary at the discontinuous step (approaching from either side of the chord length) along the width.

Figs. 3F and 3G display airfoil designs including a braking system. Fig. 3F shows a basic airfoil geometry as discussed in Fig. 3A. Each of the upper surface 31 and the lower surface 32 include parts of a braking system 40. The camber 36 includes openings 41, in which flaps 42 and 43 are situated. During the normal operation of the airfoil, i.e. no additional braking is necessary, flaps 42 and 43 lie within the openings 41. The top 44 of each flap is shaped such that it forms a continuation of the upper and lower surface and does not create another considerable discontinuity in the thickness profile. When braking is required the flaps are moved as indicated by the dotted lines, thus drastically altering the flow profile of the airfoil. The braking force may be adjusted varying the length of the flaps showing from the upper or lower surface to the top of the flap. The braking system may be modeled as a Schempp-Hirth braking system. Obviously, an embodiment of an airfoil may also only comprise a flap on either the upper or lower surface.

Fig. 3G shows a different embodiment of a braking system comprising rotatable flaps 45, which are rotated around a pivot axis 46. By altering the inclination angle α, the braking force may be adjusted as desired. The inclination of the flap 45 is regulated by a control circuit and the flap is held in position by f.e. a pneumatic or hydraulic circuit.

Fig. 4 discloses a wind rotor 100 comprising a rotatable shaft 101 around which four airfoils 102A-D are arranged. The airfoils are similar to the airfoils described in the embodiments of Figs. 2 and 3 and only show a notch or S-shape according to the invention. Each airfoil 102 is connected to the rotatable shaft 101 by a web 103 that is fixedly mounted to the shaft. Furthermore, the airfoil 102 is attached to the web 103 in a fixed manner, i.e., cannot be moved with respect to the shaft when the wind rotor is in operation. The rotatable shaft may be a drive shaft or is connected to a driveshaft driving either an electrical generator of a pump or engine of some sort.

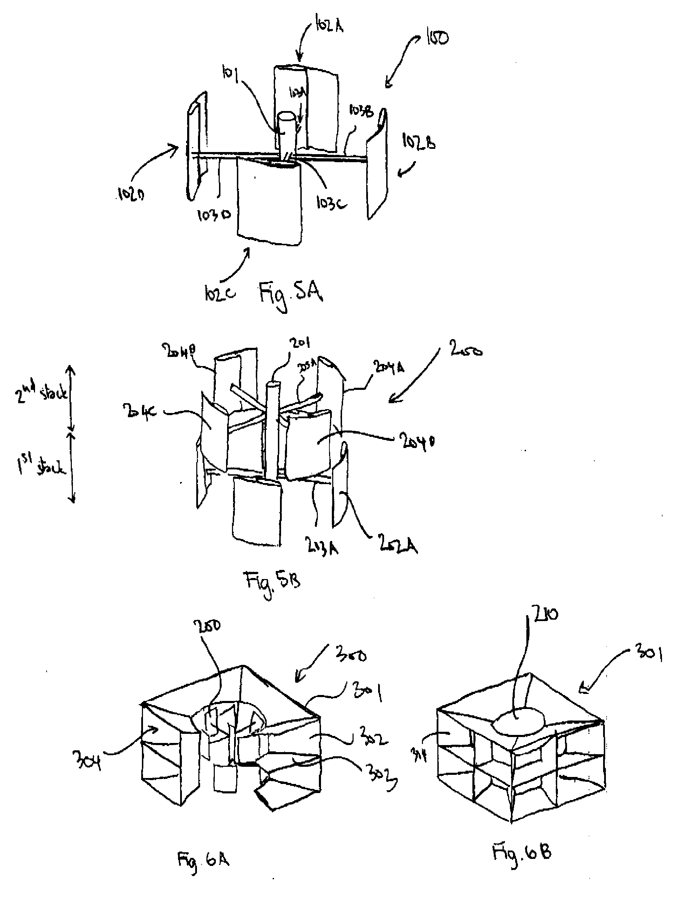

Fig. 5A shows the arrangement of Fig. 4 in a different perspective. It can be easily seen that a pair of airfoils is arranged opposite to each other with respect to the shaft. The arrangement of the airfoils defines a C₄ group and optimizes the torque characteristics of the wind rotor 100. In the embodiment two neighboring airfoils, for example, airfoils 102A and 102B, are separated by approximately the length of an additional airfoil. In order to make use of this gap (which is needed for allowing air flow onto the lower surface of the airfoil) a stacked design of airfoils as shown in Fig. 5B may be utilized. The chord length of the airfoils 102 is chosen such that with respect to the length of the webs 103 (the radius) the leading edge of an airfoil and the trailing edge of a neighboring airfoil are separated from each other by a distance a little longer than the chord length. When stacking two C₄ airfoil arrangements groups upon each other, almost the entire circumference of the circle surrounding shaft 201 contributes to power generation. The stacked design of the embodiment of Fig. 5B is essentially stacking two embodiments as shown in Fig. 5A at an angle of 45° with respect to each other. The first stack level includes airfoils 202A-D and connecting webs or carriers 203A-D, the second stack level includes airfoils 204A-D and connecting webs or carriers 205A-D.

It can be easily imagined that different designs are possible. For instance, one can stack four stacks, for example when the chord length of the airfoils is half as long as shown in the embodiments of Fig. 5, i.e. resulting in a distance between the trailing and the leading edge of two neighboring airfoils of a single stack of approximately 3 airfoils when the length of the webs 203 is kept constant. Each stack is rotated by 22.5° with respect to the stack below, thereby helically stacking airfoils to use the entire circumference around the rotating shaft 201 for power generation.

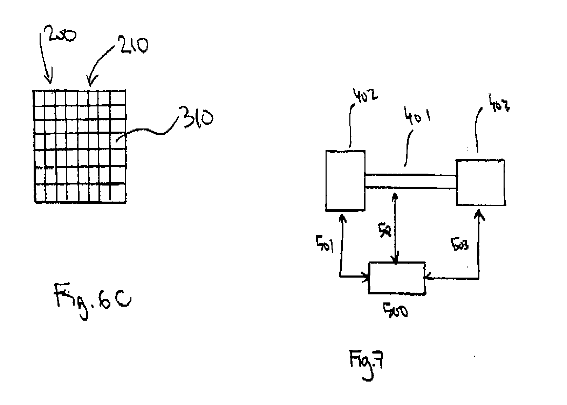

In Figs. 6A-C, different embodiments of a stator surrounding a wind rotor are shown. Fig. 6A discloses a wind rotor arrangement 300 comprising a wind rotor 200 as shown in Fig. 5B and a stator structure 301 (cut open for clarification) defining battering wind entry/exit passages 304 by stacking sheets 302 and 303 vertically and horizontally and creating passages exhibiting an Venturi effect, i.e. which channel the air flow upon a smaller area and thereby increasing the wind speed at the rotor 200. The stator structure 301 in a closed view comprising lid 210 is shown in Fig. 6B.

The wind entry passages may also function as wind exit passages when the wind is flowing from an opposite direction. The wind entry and/or exit passages are formed by vertical and horizontal walls or wall-like elements which from the outer edge of the stator to the inner edge of the stator neighboring the wind rotor have a hornlike shape exhibiting a Venturi effect to increase the speed of the wind approaching embedded wind rotor 200. As the stator structure 301 also has a C₄ symmetry, the arrangement shown in Figs. 6A and B is very much independent of the direction the wind actually comes from.

An additional embodiment may provide a mesh 310 around the wind rotor 200 and may be covered by a lid 210, as is shown, for example, in Fig. 6B also. The mesh 310 can be arranged around the wind rotor 100 or around the outer edges of the stator 301 and may be connected to same. The mesh helps to protect the wind rotor from small debris or small animals and vice versa.

Fig. 7 shows a schematic view of a wind rotor 402 connected to a generator 403 by a drive shaft 401 connected to the shaft of the wind rotor. Brakes or dampers may be arranged either around the drive shaft 401 or the rotating shaft of the wind rotor 402, which are controlled by a closed-loop control system 500 through sensoric path 501 to brake the rotor to provide constant power generation at the generator 403. In order to overcome unsteady wind conditions, the energy dissipation mechanisms such as brakes may be coupled with storage and release mechanisms, i.e., capacitors to smooth power generation at the generator 403. An embedded closed-loop control connected to the dissipation and storage mechanisms also controls sensors for pressure, movement, and output currents for example through the sensoric paths or lines 501-503, which may be situated at the wind rotor, an optional stator, the generator or the structure the rotor is placed upon.

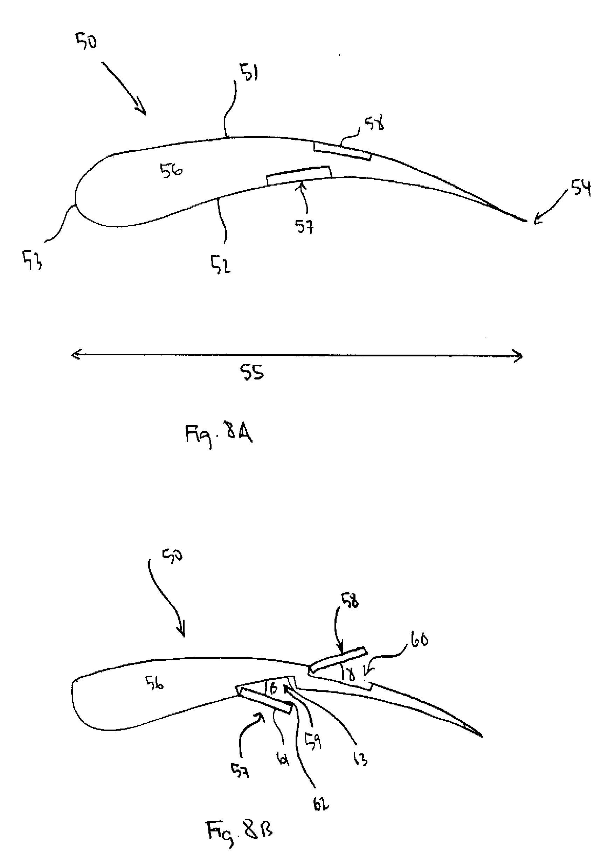

An alternative embodiment of an airfoil comprising flaps is shown in Figs. 8A and 8B. Fig. 8A display an airfoil 50 with an upper surface 51 and a lower surface 52 extending between a leading 53 and a trailing edge 54 over a chord length 55. The camber 56 includes two flaps 57, 58 situated at the lower and upper surface, respectively. The thickness profile of the airfoil 50 shows no discontinuous step in Fig. 8A. However, flaps 57 and 58 can be inclined by an angle β and γ, respectively, thereby varying the geometry of the airfoil and giving room to two notches 59 and 60. The lower side 61 of flap 57 continues being a part of the lower surface 52, more specifically the first section of the lower surface 61. The upper side 62 of the lower flap is also part of the lower surface, more specifically the third section of the lower surface 52. The upper side 62 and part of the third section 63 define the bordering walls of notch 59. It is easily understood that the angle β has an influence on the airfoil geometry, and the inclination is achieved by f.e. pneumatic or hydraulic means. As angle β can be varied the airfoil has a variable geometry. The same reasoning applies to the flap of the upper surface. It should be understood that the angles of inclination can also be varied during a single rotation of a wind turbine by an attached control circuit.

Even though the embodiments of the Figures and claims define the notch being on the lower surface, the notch or S-shape or discontinuous step in the thickness profile may also, optionally or additionally, occur on the upper surface.

Further embodiments can be derived from the embodiments shown in the drawings.

## Claims

1. Airfoil (10; 20; 102A-D; 202A-D, 204A-D), in particular for a wind rotor, comprising a camber (26) between an upper and a lower surface (11, 12; 21, 22) extending between a leading edge (13; 23) and a trailing edge (14; 24) distanced by a chord length (15; 25), the camber comprising a thickness profile (TP) perpendicular to the chord length, **characterized in that** the lower surface is shaped such that the thickness profile comprises at least one discontinuous step (30) separating lower surface in a first and second section (18, 19; 28, 29) and/or the upper surface is shaped such that the thickness profile comprises at least one discontinuous step separating the upper surface in a first and second section.

2. Airfoil according to claim 1, **characterized in that** the at least one discontinuous step is defined by an *S*-shape (26).

3. Airfoil according to any of the preceding claims, **characterized in that** a maximal thickness (TP101, TP102) of the thickness profile is larger between the lower surface and the first section of the upper surface than between the lower surface and the second section of the upper surface and/or larger between the upper surface and the first section of the lower surface than between the upper surface and the second section of the lower surface.

4. Airfoil according any of the preceding claims, **characterized in that** the first section of either the upper or lower surface covers between 20% to 80% of the chord length.

5. Airfoil according to any of the preceding claims, **characterized in that** the upper and lower surfaces are continuous surfaces.

6. Airfoil according to any of the preceding claims, **characterized in that** the first and second section of either the upper and/or lower surface are preferably continuously connected by a third section of the upper and/or lower surface, respectively, wherein a normal vector (N') of the third portion of the upper and/or lower surface points in the direction of the lower surface and/or upper surface, respectively, and a normal vector (N, M) of the first or second section of the upper and/or lower surface, respectively, points away from the lower and/or upper surface, respectively.

7. Airfoil according to any of the preceding claims, **characterized in that** the upper and/or lower surface comprises at least one extendable flap for varying the size of the discontinuous step of the thickness profile.

8. Wind rotor (100; 200) comprising a rotatable shaft (101; 201) and at least two airfoils according to any of the preceding claims, wherein the airfoils are connected to the rotatable shaft.

9. Wind rotor according to claim 8, **characterized in that** a main axis of the shaft defines a rotational axis and the at least two airfoils are arranged on the shaft with respect to each other in a rotationally symmetric manner.

10. Wind rotor according to one of the claims 8 or 9, **characterized in that** the rotatable shaft is arranged to rotate around an essentially vertical or essentially horizontal axis.

11. Wind rotor according to one of the claims 8-10, **characterized in that** at least two of the airfoils are stacked at different levels along the rotating shaft.

12. Wind rotor according to one of the claims 8-11, **characterized in that** it comprises a control circuit (500).

13. Wind rotor arrangement (300) comprising a wind rotor of any of the claims 8-12 and a stator structure (301) at least partially surrounding the wind rotor, wherein the stator comprises a flow entry passage (304) preferably for compressing a flow of a medium in the direction of the wind rotor.

14. Wind rotor arrangement according to claim 13, **characterized in that** the stator and/or the wind rotor comprises a mesh (310).

15. Wind rotor arrangement according to one of the claims 13 or 14, **characterized in that** the stator comprises a flow exit passage.
